# EUROPÄISCHE PATENTANMELDUNG

(11) **EP 4 220 101 A1**
(43) Veröffentlichungstag der Anmeldung: **02.08.2023**
(21) Anmeldenummer: 22153514.9
(22) Anmeldetag: 26.01.2022
(51) Int. Cl.: G01F 11/00, B65B 1/16, B65B 1/36, G01F 13/00

(54) **FÜLLEINRICHTUNG UND FÜLLSYSTEM ZUM VOLUMETRISCHEN DOSIEREN VON PULVER**

(71) Anmelder: Harro Höfliger Verpackungsmaschinen GmbH, 71573 Allmersbach im Tal (DE)
(72) Erfinder: Hofmeister, Jonas, 71522 Backnang (DE); Blum, Uwe, 71540 Murrhardt (DE); Wurst, Dieter, 71540 Murrhardt (DE)
(74) Vertreter: Zurhorst, Stefan

(57) **Zusammenfassung**

Die Erfindung betrifft eine Fülleinrichtung (1) und ein Füllsystem zum volumetrischen Dosieren von Pulver (2) in einem Dosierbehälter (3). Die Fülleinrichtung umfasst eine luftdurchlässige, jedoch für das Pulver (2) undurchlässige Rückhalteeinrichtung (7), welche beim Dosiervorgang eine Füllöffnung (5) des Dosierbehälters (3) und einen um die Füllöffnung (5) umlaufenden Rand (6) des Dosierbehälters (3) abdeckt, eine Füllleitung (8), die durch die Rückhalteeinrichtung (7) hindurch in den Dosierbehälter (3) geführt ist, und erste Unterdruckmittel zur Erzeugung eines Unterdrucks an der Rückhalteeinrichtung (7) auf deren dem Dosierbehälter (3) abgewandten Seite. Die Füllleitung (8) weist einen Blockierabschnitt (9) auf, wobei der Blockierabschnitt (9) der Füllleitung (8) zumindest partiell luftdurchlässig, jedoch für das Pulver (2) undurchlässig ausgeführt ist. Die Fülleinrichtung (1) umfasst zweite Unterdruckmittel zur Erzeugung eines Unterdrucks am Blockierabschnitt (8) auf dessen Außenseite.

## Beschreibung

Die Erfindung betrifft eine Fülleinrichtung zum volumetrischen Dosieren von Pulver mit den Merkmalen nach dem Oberbegriff des Anspruchs 1, sowie ein Füllsystem mit einer solchen Fülleinrichtung und mit einem Dosierbehälter.

Pulvrige Produkte werden häufig in für den Gebrauch vorbestimmte Einzelmengen aufgeteilt und verpackt. Für die Abmessung solcher Einzelmengen wird verbreitet eine volumetrische Dosierung vorgenommen, wozu Walzen- oder Schieberdosierer zum Einsatz kommen können.

Für die volumetrische Dosierung kleiner Pulvermengen, insbesondere kleiner Mengen von pulvrigem Medikament ist aus der EP 2 195 244 B1 eine Fülleinrichtung in Form eines Membranfüllers mit einem Dosierbehälter bekannt, bei der eine luftdurchlässige, jedoch für das Pulver undurchlässige und flächige Membran eine Füllöffnung und eine Rand des Dosierbehälters abdeckt. Eine Füllleitung ist durch die Membran hindurchgeführt und mündet in den Innenraum des Dosierbehälters. Beim Dosiervorgang wird ein Unterdruck an der Außenseite der Membran angelegt. Hierdurch wird die im Behälter befindliche Luft abgesaugt und gleichzeitig Pulver durch die Füllleitung in den Innenraum des Behälters eingesaugt. Die Membran hält das Pulver im Behälter zurück, sodass eine randvolle Befüllung vorgenommen werden kann.

Die genannte Form der Membrandosierung hat sich bei kleinen Füllmengen von feinen Pulvern mit ausgeprägter Adhäsionsneigung bewährt. In der Praxis werden hier Einzelmengen mit einem Volumen von beispielsweise 20 mm³ abgemessen, wobei Füllleitungen mit einem freien Leitungsdurchmesser von beispielsweise 1,6 mm zum Einsatz kommen. Für die Dosierung größerer und gröberer, weniger adhäsiverer Pulvermengen hat sich jedoch die Membrandosierung in der bekannten Form als ungeeignet herausgestellt, da der Pulverfluss in solchen Fällen nicht ausreichend präzise kontrolliert werden konnte.

Der Erfindung liegt die Aufgabe zugrunde, eine gattungsgemäße Fülleinrichtung derart weiterzubilden, dass auch größere Mengen von gut rieselfähigem Pulver genau dosiert werden können.

Diese Aufgabe wird durch eine Fülleinrichtung mit den Merkmalen des Anspruchs 1 gelöst.

Der Erfindung liegt des Weiteren die Aufgabe zugrunde, ein Füllsystem für die Dosierung auch größerer Pulvermengen anzugeben.

Diese Aufgabe wird durch ein Füllsystem mit den Merkmalen des Anspruchs 8 gelöst.

Nach der Erfindung ist eine Fülleinrichtung mit einer halbdurchlässigen, also luftdurchlässigen, jedoch für das Pulver undurchlässigen Rückhalteeinrichtung vorgesehen, welche beim Dosiervorgang die Füllöffnung des Dosierbehälters und den um die Füllöffnung umlaufenden Rand des Dosierbehälters abdeckt, wobei erste Unterdruckmittel zur Erzeugung eines Unterdrucks an der Rückhalteeinrichtung auf deren dem Dosierbehälter abgewandten Seite vorgesehen sind. Eine Füllleitung, die durch die Rückhalteeinrichtung hindurchgeführt ist, mündet beim Befüllen des Dosierbehälters in den Innenraum des Dosierbehälters. Die Füllleitung weist einen Blockierabschnitt auf, wobei der Blockierabschnitt der Füllleitung zumindest partiell luftdurchlässig, jedoch für das Pulver undurchlässig ausgeführt ist. Die Fülleinrichtung umfasst außerdem zweite Unterdruckmittel zur Erzeugung eines Unterdrucks am Blockierabschnitt auf dessen Außenseite. In einem weiteren Aspekt der Erfindung ist ein Füllsystem vorgesehen, welches die vorgenannte Fülleinrichtung sowie einen zugehörigen Dosierbehälter umfasst. Die Fülleinrichtung bewirkt die Initiierung und das Stoppen des Pulverflusses. Der Dosierbehälter gibt durch sein Volumen die abzumessenden Menge bzw. das abzumessende Volumen des Pulvers vor.

Die Erfindung basiert auf der Erkenntnis, dass größere und gröbere Pulvermengen dann zuverlässig dosiert werden können, wenn neben der genauen Befüllung des Dosierbehälters auch eine exakte Kontrolle des Pulverdurchflusses durch die Füllleitung im Anschluss an den eigentlichen Füll- und Dosiervorgang gelingt. Es hat sich nämlich gezeigt, dass bei größeren Leitungsquerschnitten der einmal in Gang gesetzte Pulverfluss nicht einfach dadurch gestoppt werden kann, dass der Unterdruck an der halbdurchlässigen Rückhalteeinrichtung abgeschaltet wird. Vielmehr neigt das Pulver zum Nachrieseln, was außer durch große Leitungsquerschnitte auch durch Pulversorten mit geringer Adhäsionsneigung begünstigt wird, und was ohne weitere Maßnahmen das Dosierergebnis beeinträchtigt oder sogar zunichtemacht.

Gemäß der Erfindung wird also zunächst der Dosierbehälter durch Aufbringen von Vakuum an der halbdurchlässigen Rückhalteeinrichtung mit dem gewünschten Zielvolumen befüllt. Nachdem dies geschehen ist, kommt der Blockierabschnitt der Füllleitung zum Einsatz. Dieser ist ebenso wie die Rückhalteeinrichtung halbdurchlässig, also zumindest partiell luftdurchlässig, jedoch für das Pulver undurchlässig ausgeführt. Es wird nun Unterdruck auf der Außenseite des Blockierabschnittes aufgebracht, welcher sich durch das halbdurchlässige Material nach innen in die Füllleitung fortsetzt und dort auf das darin befindliche Pulver einwirkt. Der Unterdruck unterbindet die Rieselfähigkeit des Pulvers und erzeugt im Bereich des Blockierabschnittes einen Pulverpfropfen, welcher die Füllleitung verstopft. Der befüllte Dosierbehälter kann nun von der Fülleinrichtung getrennt werden, ohne dass Pulver durch die Füllleitung hindurch in den Dosierbehälter nachrieselt. Es bleibt bei der durch das Volumen des Dosierbehälters vorgegebenen Volumenmenge des abgemessenen Pulvers, welche nachträglich nicht mehr verfälscht wird. Es hat sich gezeigt, dass durch den Vakuum-beaufschlagten, halbdurchlässigen Blockierabschnitt eine exakte und reproduzierbare Steuerung des Pulverdurchflusses insbesondere dann möglich ist, wenn größere Pulvermengen mit größeren Füllleitungsquerschnitten dosiert werden müssen. In der Praxis gelingt beispielweise das Dosieren von pulvrigem Waschmittel in Einzelmengen von 20.000 mm³ unter Verwendung von Füllleitungen mit einem freien Leitungsdurchmesser von 8 bis 10 mm.

Für die Erzeugung des blockierenden Pulverpfropfens kann es ausreichen, dass die Füllleitung im Blockierabschnitt beispielsweise mit einem Fenster versehen ist, welches mit dem halbdurchlässigen Material gefüllt ist. In bevorzugter Weiterbildung ist der Blockierabschnitt entlang seines gesamten Umfanges luftdurchlässig, jedoch für das Pulver undurchlässig ausgeführt, wobei die zweiten Unterdruckmittel einen den Blockierabschnitt ringförmig umschließenden zweiten Unterdruckraum umfassen. Hierdurch wirkt der Unterdruck um den vollständigen Umfang des Blockierabschnittes herum auf das innen in der Füllleitung befindliche Pulver ein. Selbst mit geringen Druckdifferenzen kann auf diese Weise eine zuverlässige Blockierwirkung bewirkt werden.

Es kann zweckmäßig sein, der Blockierabschnitt beispielsweise aus einer dünnen, biegeweichen Membran zu bilden, welche durch ein Stützgitter oder dergleichen in Form gehalten wird. Vorteilhaft ist der Blockierabschnitt aus einem starren, porösen Werkstoff insbesondere aus gebundenen Metallpartikeln gebildet. Als "starr" ist hier gemeint, dass das Material der im Betrieb aufgebrachten Druckdifferenz aus sich heraus, also selbsttragend standhält, ohne dass der Querschnitt des Blockierabschnittes kollabiert. Vielmehr behält der die Füllleitung auch bei wechselnden Druckverhältnissen ihren konstruktiv vorgegebenen Querschnitt bei, sodass ein präzise reproduzierbarer Pulverfluss ebenso wie eine zuverlässige Blockierwirkung erreicht werden können.

Je nach Anwendungsfall kann es in Betracht kommen, den endseitigen Mündungsabschnitt der Füllleitung als Blockierabschnitt auszubilden. In der Praxis hat sich aber gezeigt, dass sich der durch den Blockierabschnitt eingetragene Unterdruck über die Grenzen des Blockierabschnittes hinaus im Pulver fortsetzt und in Verbindung mit der genannten Ausgestaltung für Anhaftungen jenseits der Leitungsmündung sorgt. Um zu vermeiden, dass solche Anhaftungen generiert werden und nach erfolgter Befüllung des Dosierbehälters wieder aus diesem entnommen werden, erstreckt sich in einer bevorzugten Ausführungsform ein Mündungsabschnitt der Füllleitung zwischen dem freien Ende und dem Blockierabschnitt, wobei der Mündungsabschnitt luftundurchlässig ist. Durch Anpassung der Länge des Mündungsabschnittes kann die Grenze der blockierenden Pulveranhaftung genau an das freie Ende bzw. an die Austrittsöffnung der Füllleitung gelegt werden. In zweckmäßiger Weiterbildung ist hierzu der luftundurchlässige Mündungsabschnitt durch eine insbesondere auswechselbare Einsteckhülse gebildet, was eine genaue Längenanpassung des Mündungsabschnittes begünstigt, und was außerdem eine Umrüstung der Fülleinrichtung auf verschiedene Pulversorten durch Austausch der Einsteckhülsen vereinfacht. Mit der erzielten genauen Positionierung der Pulveranhaftungs-Grenze lässt sich sicherstellen, dass beim Trennen von Dosierbehälter und Fülleinrichtung einerseits kein Pulver aus der Füllleitung nachrieselt, und dass andererseits kein Pulver aus dem befüllten Dosierbehälter durch den Trennvorgang wieder entnommen wird.

Es kann zweckmäßig sein, die Rückhalteeinrichtung nur einseitig relativ zur Füllleitung anzuordnen. Bevorzugt verläuft jedoch die Rückhalteeinrichtung geschlossen um die Füllleitung herum, wobei die ersten Unterdruckmittel zur Erzeugung des Unterdrucks an der Rückhalteeinrichtung einen korrespondierend zur Rückhalteeinrichtung um die Füllleitung herum verlaufenden ersten Unterdruckraum umfassen. Hierdurch entsteht eine quasi-koaxiale und kompakte Bauform, welche eine möglichst gleichmäßige Unterdruckverteilung und damit eine möglichst gleichmäßige Füllung des Dosierbehälters mit einer zuverlässigen Blockierwirkung in der Füllleitung verbindet. Außerdem können so mehrere Fülleinrichtungen dicht beieinander positioniert werden, was das gleichzeitige Dosieren an mehreren Stellen begünstigt.

Auch bei der Rückhalteeinrichtung kann eine halbdurchlässige Membran zum Einsatz kommen. Bevorzugt ist jedoch die Rückhalteeinrichtung - ebenso wie der Blockierabschnitt - aus einem starren, porösen Werkstoff insbesondere aus gebundenen Metallpartikeln gebildet. Hierdurch wird ohne zusätzliche Stützmaßnahmen sichergestellt, dass die Rückhalteeinrichtung nicht durch die anliegende Druckdifferenz in den Dosierbehälter hineingesogen wird. Vielmehr ist die Rückhalteeinrichtung insoweit starr, dass ein konstruktiv vorgegebenes Dosiervolumen des Dosierbehälters bei wechselnden Druckverhältnissen unter Einhaltung geringer Toleranzen beibehalten wird, sodass sich eine hohe Dosiergenauigkeit auch bei großen Behältermaßen ergibt.

Ein Ausführungsbeispiel der Erfindung ist im Folgenden anhand der Zeichnung näher beschrieben. Es zeigen:
- Fig. 1: in einer schematischen Längsschnittdarstellung eine erfindungsgemäße Fülleinrichtung mit einer halbdurchlässigen Rückhalteeinrichtung für Pulver, mit einer durch die Rückhalteeinrichtung hindurchgeführten Füll-leitung, mit einer auf der Außenseite der Membran angeordneten Unter-druckkammer und mit einem unterdruckgesteuerten Blockierabschnitt der Füllleitung, und
- Fig. 2: in einer schematischen Längsschnittdarstellung das erfindungsgemäße Füllsystem mit einer Fülleinrichtung nach Fig. 1 und mit einem darunter befindlichen Dosierbehälter.

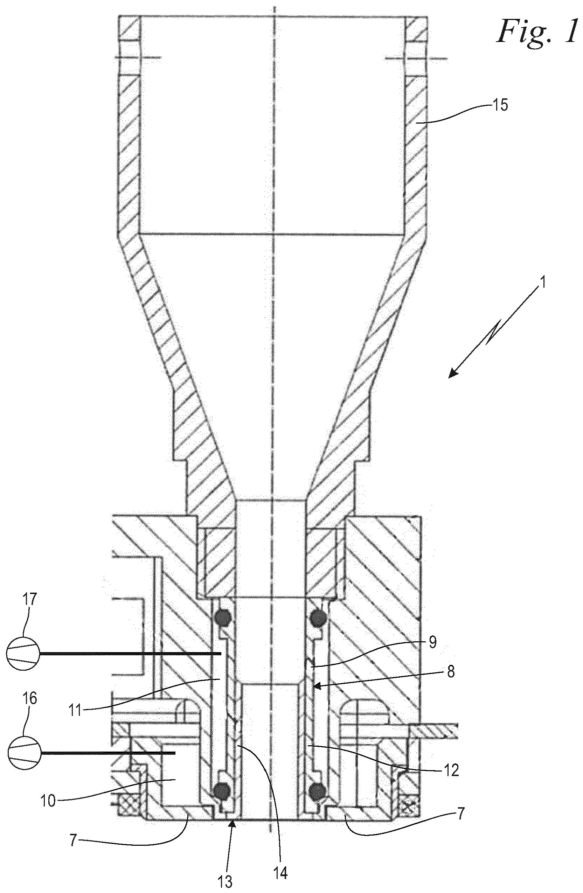

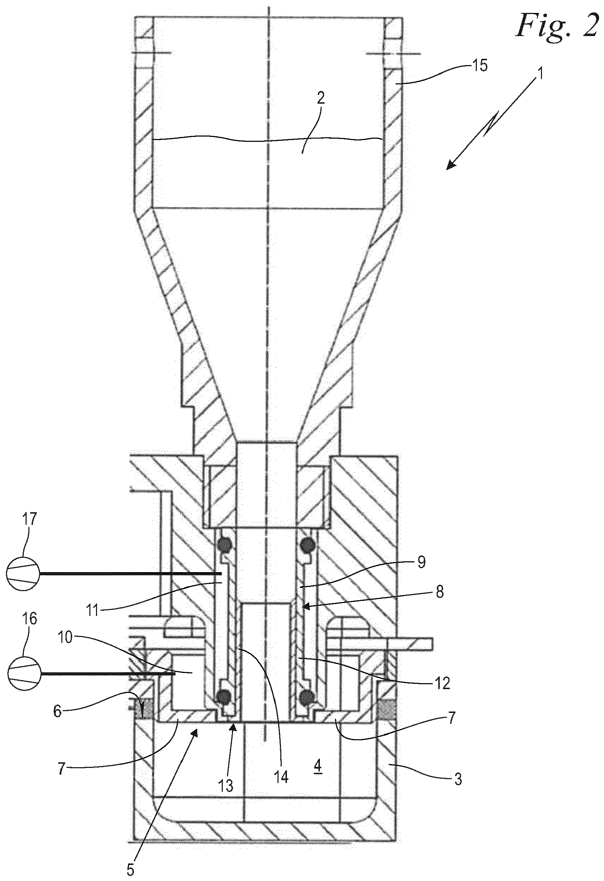

Fig. 1 zeigt in schematischer Längsschnittdarstellung eine erfindungsgemäße Fülleinrichtung 1 zum volumetrischen Dosieren von Pulver 2 (Fig. 2). Das Pulver 2 ist im gezeigten Ausführungsbeispiel ein pulvriges Waschmittel. Mit der Fülleinrichtung 1 können aber auch beliebige andere Pulver 2 wie gemahlener Kaffee, Mehl oder dergleichen dosiert werden. Der hier gewählte Begriff Pulver umfasst hier ganz allgemein rieselfähige Materialien einschließlich solcher mit gröberer Körnung wie Salz, Zucker, aber auch Sämereien oder dergleichen. Im gezeigten Ausführungsbeispiel soll pulvriges Waschmittel mit einem Zielvolumen von etwa 20.000 mm³ dosiert werden. Die Erfindung erlaubt aber auch größere oder kleiner Zielvolumina.

Die Fülleinrichtung 1 umfasst einen trichterförmigen Vorratsbehälter 15, in dem ein Vorrat des Pulvers 2 bereitgestellt ist. Des Weiteren umfasst die Fülleinrichtung 1 eine teildurchlässige, nämlich luftdurchlässige, jedoch für das Pulver 2 undurchlässige Rückhalteeinrichtung 7 sowie eine Füllleitung 8, die an ihrem oberen Ende in den Vorratsbehälter 15 mündet, und die im Bereich ihres gegenüberliegenden, unteren und freien Endes durch die Rückhalteeinrichtung 7 hindurchgeführt ist. Die Füllleitung hat einen freien Leitungsdurchmesser von etwa 8mm. Im Rahmen der Erfindung sind aber auch größere oder kleinere Leitungsdurchmesser realisierbar. Die Rückhalteeinrichtung 7 kann ein Sieb, ein Gitter, eine Membran oder dergleichen sein und ist im gezeigten Ausführungsbeispiel entsprechend der schematischen Längsschnittdarstellung ein starres, selbstragendes Formteil aus einem starren, porösen Werkstoff. Die Rückhalteeinrichtung 7 verläuft geschlossen um die Füllleitung 8 herum.

Als weiterer Teil umfasst die Fülleinrichtung 1 erste Unterdruckmittel zur Erzeugung eines Unterdrucks an der gleichen Seite der Rückhalteeinrichtung 7, an der auch die Füllleitung 8 vom Vorratsbehälter 15 zur Rückhalteeinrichtung 7 herangeführt ist. Diese Seite ist außerdem im Dosierbetrieb nach Fig. 2 die dem Dosierbehälter 3 abgewandten Seite der Rückhalteeinrichtung 7. Die ersten Unterdruckmittel umfassen einen ersten Unterdruckraum 10, welcher nach unten durch die Rückhalteeinrichtung 7 hin begrenzt ist. Im gezeigten Ausführungsbeispiel verläuft der erste Unterdruckraum 10 korrespondierend zur Rückhalteeinrichtung 7 um die Füllleitung 8 herum und ist dabei im Formteil der Rückhalteeinrichtung 7 ausgeformt. Der erste Unterdruckraum 10 ist - wie hier nur schematisch dargestellt - mit einer ersten Unterdruckquelle 16 verbunden und kann - hiervon gespeist - bei Bedarf gesteuert mit Unterdruck beaufschlagt werden.

Die Füllleitung 8 weist einen Blockierabschnitt 9 auf, wobei der Blockierabschnitt 9 analog zur Rückhalteeinrichtung 7 zumindest partiell luftdurchlässig, jedoch für das Pulver 2 undurchlässig ausgeführt ist. Hierzu passend umfasst die Fülleinrichtung 1 zweite Unterdruckmittel zur Erzeugung eines Unterdrucks am Blockierabschnitt 8 auf dessen Außenseite. Teil der zweiten Unterdruckmittel ist ein zweiter Unterdruckraum 11, welcher außenseitig an das Material des Blockierabschnittes 9 angrenzt. Der zweite Unterdruckraum 11 ist - wie hier nur schematisch dargestellt - mit einer zweiten Unterdruckquelle 17 verbunden und kann - hiervon gespeist - bei Bedarf gesteuert mit Unterdruck beaufschlagt werden. Anstelle von zwei Unterdruckquellen 16, 17 kann auch eine gemeinsame Unterdruckquelle zweckmäßig sein. Jedenfalls ist eine nicht näher dargestellte Steuerung vorhanden, mit der die beiden Unterdruckräume 10, 11 unabhängig voneinander mit Unterdruck beaufschlagt werden können.

Im gezeigten Ausführungsbeispiel ist der Blockierabschnitt 9 entlang seines gesamten Umfanges luftdurchlässig, jedoch für das Pulver 2 undurchlässig ausgeführt. Korrespondierend dazu umschließt der zweite Unterdruckraum 11 ringförmig den Blockierabschnitt 9. Koaxial dazu umschließt der erste Unterdruckraum 10 den zweiten Unterdruckraum 11. Der Blockierabschnitt 9 ist durch einen starren, selbsttragenden Formkörper gebildet und ist hierzu aus einem starren, porösen Werkstoff gefertigt. Dabei handelt es sich um den gleichen Werkstoff wie der Werkstoff der Rückhalteeinrichtung 7, nämlich um einen porösen Stoff aus gebundenen Metallpartikeln, welcher unter dem Handelsnamen ALWA POR erhältlich ist. Es können aber auch andere geeignete Werkstoffe zum Einsatz kommen, was Sintermetallteile, Frästeile, 3D-Druckteile und dergleichen einschließt.

Die Füllleitung 8 weit ein freies Ende 13 auf, welches beim Füllvorgang (Fig. 2) dem Dosierbehälter 3 zugewandt ist und dort die Mündung der Füllleitung 8 in den Dosierbehälter 3 bildet. Zwischen dem freien Ende 13 und dem Blockierabschnitt 9 erstreckt sich ein Mündungsabschnitt 12 der Füllleitung 8. Anders als der Blockierabschnitt 9 ist der Mündungsabschnitt 12 luftundurchlässig. Der Mündungsabschnitt 12 kann durch ein Rohrstück gebildet sein, welches sich an den porösen Blockierabschnitt 9 anschließt. Im gezeigten Ausführungsbeispiel erstreckt sich das poröse Formteil, welches auch, aber nicht nur den Blockierabschnitt 9 bildet, bis hin zum freien Ende 13 und ist angrenzend an das freie Ende 13 zur Bildung des undurchlässigen Mündungsabschnittes 12 mit einer luftundurchlässigen Einsteckhülse 14 ausgekleidet. Die Einsteckhülse 14 kann bei Bedarf herausgezogen, in der Länge angepasst und wieder eingesteckt werden. Außerdem kommt eine Auswechselung einzelner Einsteckhülsen 14 zur Anpassung an verschiedene Pulversorten in Betracht.

Fig. 2 zeigt in einer Längsschnittdarstellung ein erfindungsgemäßes Füllsystem, welches die Fülleinrichtung 1 nach Fig. 1 sowie einen Dosierbehälter 3 umfasst. Die gezeigte Anordnung ist zum gleichzeitigen volumetrischen Dosieren des Pulvers 2 und zum Befüllen des Dosierbehälters 3 vorgesehen. Der Dosierbehälter 3 ist im gezeigten Ausführungsbeispiel ein zur späteren Versiegelung vorgesehener Aufbewahrungsbehälter, kann aber auch ein Zwischen- oder Überführungsbehälter sein. Der Dosierbehälter 3 weist einen zur Aufnahme des Pulvers 2 vorgesehenen Innenraum 4, eine einseitig nach oben offene Füllöffnung 5 sowie einen um die Füllöffnung 5 umlaufenden Rand 6 auf.

Beim Befüllen des Dosierbehälters 3 sitzt die Fülleinrichtung 1 entsprechend der Darstellung nach Fig. 2 oben auf dem Dosierbehälter 3 auf. Hierbei deckt die Rückhalteeinrichtung 7 sowohl die Füllöffnung 6 als auch den umlaufenden Rand 6 des Dosierbehälters 3 ab. Die Rückhalteeinrichtung 7 ist umlaufend und dichtend an den Rand 6 des Dosierbehälters 3 angedrückt. Die durch die Rückhalteeinrichtung 7 hindurchgeführte Füllleitung 8 mündet in den Innenraum 4 des Dosierbehälters 3. Der erste Unterdruckraum 10 liegt hierbei auf der dem Dosierbehälter 3 abgewandten Seite der Rückhalteeinrichtung 7.

Im gewöhnlichen Betrieb herrscht im Bereich des Vorratsbehälters 15 atmosphärischer Druck, während bei laufendem Dosier- und Füllprozess der erste Unterdruckraum 10 von der Unterdruckquelle 16 mit Unterdruck beaufschlagt wird. Der zweite Unterdruckraum 11 bleibt zunächst inaktiv, ist also nicht durch seine zugehörige Unterdruckquelle 17 mit Unterdruck beaufschlagt. Infolge der sich einstellenden Druckdifferenz zwischen Vorratsbehälter 15 und dem erstem Unterdruckraum 10 entsteht ein Luftstrom, der aus dem Innenraum 4 des Dosierbehälters 3 durch die Rückhalteeinrichtung 7 hindurch in den ersten Unterdruckraum 10 führt. Dieser Luftstrom wird eingangsseitig durch die Füllleitung 8 aus dem Vorratsbehälter 15 angesaugt, wobei das Pulver 2 aus dem Vorratsbehälter 15 durch die Füllleitung 8 hindurch in den Innenraum 4 des Dosierbehälters 3 mitgeführt wird. Die zuvor beschriebenen Eigenschaften der Rückhalteeinrichtung 7 als luftdurchlässig, jedoch für das Pulver 2 undurchlässig bewirken, dass zwar die angesaugte Luft durch die Rückhalteeinrichtung 7 hindurchgesaugt werden kann, dass jedoch die Partikel des Pulvers 2 an der Rückhalteeinrichtung 7 zurückgehalten werden. Da die Rückhalteeinrichtung 7 über der gesamten Fläche der Füllöffnung 6 durchströmt wird, wird das Pulver 2 im gesamten Innenraum 4 des Dosierbehälters 3 verteilt, bis eine randvolle, lückenfreie Befüllung des Innenraumes 4 erreicht ist.

Der Dosierbehälter 3 gibt ein Volumen vor, welches durch seine Wände und seinen Boden, sowie durch die auf dem Rand 5 aufliegende Fläche der Rückhalteeinrichtung 7 begrenzt ist. Die randvolle, lückenfreie Befüllung des Innenraumes 4 erzeugt die gewünschte volumetrische Abmessung einer Einzelmenge des Pulvers 2 mit genau dem genannten Volumen des Dosierbehälters 3. Im gezeigten Ausführungsbeispiel ist die aufliegende Deckfläche der Rückhalteeinrichtung 7 eben ausgeführt. Eine Volumenanpassung kann dadurch vorgenommen werden, dass eine andere Rückhalteeinrichtung 7 mit einer anders geformten, beispielsweise konkaven oder konvexen Deckfläche eingesetzt wird.

Nach Beendigung des vorgenannten Verfahrensschrittes wird der erste Unterdruckraum 10 mit atmosphärischem Druck beaufschlagt. Es werden nun Vorbereitungen getroffen, um die Fülleinrichtung 1 mit ihrer Rückhalteeinrichtung 7 vom Dosierbehälter 3 abnehmen zu können. Hierzu wird der zweite Unterdruckraum 11 von der zweiten Unterdruckquelle 17 mit Unterdruck beaufschlagt. Der Unterdruck setzt sich durch das halbdurchlässige Material des Blockierabschnittes 9 hindurch ins Innere der Füllleitung 8 fort, wobei jedoch das dort befindliche Pulver 2 von dem genannten Material des Blockierabschnittes in der Füllleitung 8 zurückgehalten wird und nicht in den zweiten Unterdruckraum 11 gelangt. Infolge des Unterdrucks verdichtet sich das Pulver 2 im Blockierabschnitt 9 bis in den Mündungsabschnitt 12 hinein derart, dass ein nicht rieselfähiger, die Füllleitung 8 verschließender Pulverpfropfen entsteht. Die Länge des Mündungsabschnittes 12 bzw. der Einsteckhülse ist derart auf den einwirkenden Unterdruck und auf die Eigenschaften des zu dosierenden Pulvers abgestimmt, dass die untere Grenze des Pulverpfropfens möglichst genau mit dem freien Ende 13 der Füllleitung 8 zusammentrifft.

Im vorgenannten Zustand kann nun der Unterdruck des ersten Unterdruckraums 10 abgeschaltet werden. Die Fülleinrichtung 1 und der Dosierbehälter 3 können voneinander getrennt werden, ohne dass Pulver 2 aus der Füllleitung 8 nachrieselt, und ohne dass Pulver 2 aus dem Innenraum 4 des Dosierbehälters 3 angesaugt und mitgenommen wird. Die bereits abgemessene Dosiermenge des Pulvers 2 wird also nicht durch den Trennvorgang von Fülleinrichtung 1 und Dosierbehälter 3 nachträglich verfälscht. Unmittelbar danach kann der umlaufende Rand 6 des Dosierbehälters 3 mit einer Siegelfolie durch Verklebung bzw. Verschweißung abgesiegelt werden. Es ist dann ein versiegelter Aufbewahrungsbehälter gebildet, der ohne weitere Zwischenschritte zur Lagerung und Nutzung durch den Endverbraucher fertiggestellt ist.

Die erfindungsgemäße Anordnung ist hier beispielhaft für eine einzelne Fülleinrichtung 1 im Zusammenspiel mit einem einzelnen Dosierbehälter 3 dargestellt. Aufgrund der kompakten Bauform ist es aber ohne weiteres möglich, mehrere solcher Füllsysteme für einen gleichzeitigen Betrieb in einer Reihe oder sogar in einer Matrix anzuordnen.

Im praktischen Betrieb kann nicht ausgeschlossen werden, dass sich die Poren der Rückhalteeinrichtung 7 und/oder des Blockierabschnittes 9 nach und nach mit Pulverpartikeln zusetzen. Es kann deshalb zweckmäßig sein, zusätzlich zu den gezeigten Unterdruckquellen 16, 17 auch nicht dargestellte Überdruckquellen vorzusehen, mittels derer die Durchströmung der Rückhalteeinrichtung 7 und/oder der Blockierabschnitt 9 bei Bedarf umgekehrt werden kann, sodass die zugesetzten Poren freigeblasen werden.

## Patentansprüche

1. Fülleinrichtung (1) zum volumetrischen Dosieren von Pulver (2) in einem Dosierbehälter (3), umfassend
- eine luftdurchlässige, jedoch für das Pulver (2) undurchlässige Rückhalteeinrichtung (7), welche beim Dosiervorgang eine Füllöffnung (5) des Dosierbehälters (3) und einen um die Füllöffnung (5) umlaufenden Rand (6) des Dosierbehälters (3) abdeckt,
- eine Füllleitung (8), die durch die Rückhalteeinrichtung (7) hindurchgeführt ist, und die beim Befüllen des Dosierbehälters (3) in einen Innenraum (4) des Dosierbehälters (3) mündet,
- und erste Unterdruckmittel zur Erzeugung eines Unterdrucks an der Rückhalteeinrichtung (7) auf deren dem Dosierbehälter (3) abgewandten Seite,
**dadurch gekennzeichnet, dass** die Füllleitung (8) einen Blockierabschnitt (9) aufweist, wobei der Blockierabschnitt (9) der Füllleitung (8) zumindest partiell luftdurchlässig, jedoch für das Pulver (2) undurchlässig ausgeführt ist, und dass die Fülleinrichtung (1) zweite Unterdruckmittel zur Erzeugung eines Unterdrucks am Blockierabschnitt (8) auf dessen Außenseite umfasst.

2. Fülleinrichtung nach Anspruch 1,
**dadurch gekennzeichnet, dass** der Blockierabschnitt (9) entlang seines gesamten Umfanges luftdurchlässig, jedoch für das Pulver (2) undurchlässig ausgeführt ist, und dass die zweiten Unterdruckmittel zur Erzeugung des Unterdrucks am Blockierabschnitt (9) einen den Blockierabschnitt (9) ringförmig umschließenden zweiten Unterdruckraum (11) umfassen.

3. Fülleinrichtung nach Anspruch 1 oder 2,
**dadurch gekennzeichnet, dass** der Blockierabschnitt (9) aus einem starren, porösen Werkstoff insbesondere aus gebundenen Metallpartikeln gebildet ist.

4. Fülleinrichtung nach einem der Ansprüche 1 bis 3,
**dadurch gekennzeichnet, dass** die Füllleitung (8) ein beim Füllvorgang dem Dosierbehälter (3) zugewandtes freies Ende (13) aufweist, wobei sich zwischen dem freien Ende (13) und dem Blockierabschnitt (9) ein Mündungsabschnitt (12) der Füllleitung (8) erstreckt, und wobei der Mündungsabschnitt (12) luftundurchlässig ist.

5. Fülleinrichtung nach Anspruch 4,
**dadurch gekennzeichnet, dass** der luftundurchlässige Mündungsabschnitt (12) durch eine insbesondere auswechselbare Einsteckhülse (14) gebildet ist.

6. Fülleinrichtung nach einem der Ansprüche 1 bis 5,
**dadurch gekennzeichnet, dass** die Rückhalteeinrichtung (7) geschlossen um die Füllleitung (8) herum verläuft, und dass die ersten Unterdruckmittel zur Erzeugung des Unterdrucks an der Rückhalteeinrichtung (7) einen korrespondierend zur Rückhalteeinrichtung (7) um die Füllleitung (8) herum verlaufenden ersten Unterdruckraum (10) umfassen.

7. Fülleinrichtung nach einem der Ansprüche 1 bis 6,
**dadurch gekennzeichnet, dass** die Rückhalteeinrichtung (7) aus einem starren, porösen Werkstoff insbesondere aus gebundenen Metallpartikeln gebildet ist.

8. Füllsystem zum volumetrischen Dosieren von Pulver (2), umfassend einen Dosierbehälter (3) mit einem Innenraum (4) und mit einem um eine Füllöffnung (5) des Dosierbehälters (3) umlaufenden Rand (6), des Weiteren umfassend eine Fülleinrichtung (1) nach einem der Ansprüche 1 bis 8.
